# EUROPEAN PATENT SPECIFICATION

(11) **EP 2 151 490 B1**
(45) Date of publication and mention of the grant of the patent: **29.08.2012**
(21) Application number: 08764769.9
(22) Date of filing: 27.05.2008
(51) Int. Cl.: C11D 17/00, B29C 33/72, B29C 45/17, C11D 7/26

(54) **Purging agent and process for purging a resin molding machine with the same**
Reinigungsmittel und Verfahren zur Reinigung einer Harzformmaschine damit
Agent de purge et procédé pour purger une machine de moulage de résine à l'aide de cet agent

(30) Priority: 29.05.2007 JP 2007141475
(43) Date of publication of application: 10.02.2010
(73) Proprietor: Asahi Kasei Chemicals Corporation, Tokyo 101-8101 (JP)
(72) Inventor: ITO, Mikihiko, Tokyo 101-8101 (JP); YAMAUCHI, Noriko, Tokyo 101-8101 (JP); HAMADA, Kazuyuki, Tokyo 101-8101 (JP)
(74) Representative: Bradley, Josephine Mary
(86) International application number: PCT/JP2008/059753
(87) International publication number: WO 2008/146822

(56) References cited:
- JP-A- 03 140 214
- JP-A- 09 208 992
- JP-A- 2000 119 458
- JP-A- 2002 001 734
- JP-A- 2002 121 596
- JP-A- 2005 200 443
- JP-A- 2006 335 913
- JP-A- 2007 313 693

## Description

### Technical Field

The present invention relates to a cleaning agent and a process for cleaning a resin-molding machine using the same.

### Background Art

Generally, for the purpose of resin coloring, mixing, molding, or the like, a resin-molding machine, such as an extrusion machine and an injection molding machine, is used. In this type of resin-molding machine, a resin that is a raw material of a molded article, various additives, such as a dye and a pigment, further, carbides produced by the thermal degradation of these, and the like remain in the cavity, cylinder, screw, or the like of the resin-molding machine at the completion of predetermined work. Such residues are mixed in the molded article during resin-molding performed later, so they can be a cause of the appearance defects and the like of the obtained molded article. Particularly, in the case where a resin molded next is transparent, even if the amount of the mixed residues is slight, the transparency of the obtained molded article is reduced, or black specks and mixed foreign matter, and the like are easily visually recognized, so the residues can be a cause causing considerable appearance defects. Therefore, it is desired to completely remove the residues from the resin-molding machine.

In order to remove the residues from the resin-molding machine, the disassembly and cleaning of the resin-molding machine are performed by workers. However, such disassembly and cleaning always involve the work of disassembling the resin-molding machine and assembling it again, so the work efficiency is very poor. In addition, the cavity, the cylinder, the screw, or the like may be damaged and worn by polishing with a brush or the like used in cleaning. Also, there is a portion where the checking of the cleaning by workers is difficult, such as inside the cylinder. Therefore, an easy method for removing the residues from the resin-molding machine without performing the work of disassembling the resin-molding machine is required.

On the other hand, the so-called replacement work is performed in which cleaning in the resin-molding machine is performed by filling the resin-molding machine with a material molded next and the like (hereinafter referred to as a "replacement material") and discharging the replacement material along with residues. But, in such replacement work, carbides remaining in the screw or the like cannot be sufficiently removed, so the above-described appearance defects occur easily, and disassembly and cleaning have to be performed temporarily in the actual circumstances. Further, because of an increase in awareness of environmental problems represented by resin recycling, a reduction in the amount of the resin used, and the like in recent years, the amount of the replacement material used during replacement work tends to be reduced to the limit, which is causing the circumstances in which the remaining of carbides occurs more easily.

On the other hand, Patent Document 1 describes a process for cleaning an inorganic member, comprising contacting the inorganic member of a melt molding apparatus, to which a thermoplastic resin having a -COO- and/or -CONH- group in the polymer main chain is attached, with melted bis(2-hydroxyethyl)terephthalate (hereinafter also referred to as "BHET") to remove the thermoplastic resin from the inorganic member. Further, this Patent Document 1 describes that in the cleaning of the molding machine, the melted BHET may be flowed in the molding machine, before a purge agent comprising a gel resin not melting at cleaning temperature is used, or being mixed with the purge agent (see paragraph number [0025]).

Also, Patent Document 2 describes a process for cleaning a polyester spinning apparatus with a polyester oligomer comprising at least 60 mole percent of BHET.

[Patent Document 1] Japanese Patent Laid-Open No. 2005-200443
[Patent Document 2] Japanese Patent Laid-Open No. 49-80320

### Disclosure of the Invention

### Problems to be Solved by the Invention

However, the cleaning agent described in Patent Document 1 has a problem that in order to clean a complicated structure, such as the cylinder and screw of a resin-molding machine, the cleaning agent is required to be used a plurality of times due to its poor filling properties, or the resin-molding machine must be disassembled once and partly dipped in the cleaning agent. Generally, when cleaning in a resin-molding machine is performed using a cleaning agent, the cleaning agent itself can remain as a residue, so replacement properties (non-residual properties), that is, being easily replaced with a replacement material, are required of the cleaning agent itself, but the replacement properties of the cleaning agent described in Patent Document 1 are also insufficient.

Also, the cleaning agent described in Patent Document 1 is a very low viscosity liquid at a temperature equal to or higher than the melting point of BHET (about 110°C), so in a general resin-molding machine cleaning application where cleaning treatment is performed at a high temperature of about 130 to 400°C, the cleaning agent has poor filling properties in the resin-molding machine or extrudability and cannot withstand practical use. Also, inconvenience, such as BHET being ejected from the nozzle of the resin-molding machine and fixed to the portion under the hopper to the feed zone in the resin-molding machine, occurs easily, and in some cases, a state in which the operation of the resin-molding machine stops, and the like may occur. Therefore, the cleaning agent described in Patent Document 1 is unsuitable for a resin-molding machine cleaning application, due to the reasons that the workability during cleaning is worsened, that the work of disassembling the resin-molding machine after the operation stops is required in some cases, and the like.

Further Patent Document 1 discloses that the melted BHET is flowed in the resin-molding machine, being mixed with the purge agent comprising a gel resin not melting at cleaning temperature. But, if the BHET and the gel resin are mixed and introduced into the cylinder of the resin-molding machine in this manner, the BHET and the gel resin are not easily compatible with each other in the resin-molding machine, so the above-described inconvenience cannot be effectively suppressed. In addition, the gel resin has poor flowability, so the filling properties in the resin-molding machine or extrudability is further worsened, and as a result, further inconvenience, such as an excessive burden being imposed on the rotation of the screw of the resin-molding machine, also occurs.

On the other hand, the polyester "oligomer" comprising at least 60 mole percent of BHET described in Patent Document 2 is a simple decomposition product of polyester and is not substantially different from the cleaning agent comprising BHET described in Patent Document 1. Such a cleaning agent comprising BHET has an effect on polyester, but a sufficient effect is not obtained for resins other than polyester molded by a resin-molding machine, such as an injection molding machine and an extruder, and carbides because it is difficult to pelletize the oligomer comprising BHET.

JP 2002001734 (A) relates to a resin composition for cleaning comprising (a) a thermoplastic resin of 100 pts.wt., (b) an organic phosphorus compound of 0.5 to 20 pts.wt., (c) an anionic surfactant and (d) an alkylene glycol fatty acid ester.

JP 9208992 (A) relates to a resin composition comprising (A) 100 pts.wt. of a styrenic resin, (B) 0.5-20 pts.wt. of an anionic surfactant, (C) 0.5-20 pts.wt. of a polyhydric alcohol, (D) 0.1-20 pts.wt. of an alkylene glycol fatty acid ester and (E) 0.05-5 pts.wt. of a fatty acid metal salt.

JP 2000119458 (A) relates to cleaning resin compositions comprising (a) 100 pts.wt. polypropylene having a melt flow rate of 2-4 g/10 min (230 °C/2.16 kg), (b) 0.5-20 pts.wt. anionic surface active agent, (c) 0.5-20 pts.wt. polyhydric alcohol, (d) 0.1-20 pts.wt. alkylene glycol fatty acid ester, and (e) 0.05-5 pts.wt. metal salt of a fatty acid.

JP 2002121596 (A) relates to a detergent for a synthetic-resin-molding machine comprising a carboxylic acid amide compound and/or a carboxylic acid ester, especially a carboxylic acid amide compound of the general formula: (R1-CONH)ₘ(R2) (wherein R1 is a 5-30C hydrocarbon group, R2 is hydrogen, a 1-30C hydrocarbon group or a group of the formula:

(CH₂)ₓNH(CO(CH₂)_{y}CONH(CH₂)ₓNH)_{z}COR1,

m is 1 or 2, x is an integer of 1-6, y is an integer of 1-8 and z is an integer).

JP 2006335913 (A) relates to a resin composition for cleaning obtained by formulating (A) a polyolefin resin with (B) an inorganic filler and (C) an anionic surfactant.

JP3140214 (A) relates to a mold sweeping composition which contains specified amounts of an amino alcohol-based compound, surface active agent, organic peroxide, white carbon and ethylene propylene-based rubber stock and has a specified curing speed and after-cure hardness.

The present invention has been made in view of such circumstances, and it is an object of the present invention to provide a cleaning agent that has excellent cleaning properties and replacement properties and can further improve the workability during the cleaning of a resin-molding machine, and a process for cleaning a resin-molding machine using the same.

### Means for Solving the Problems

In order to solve the above problems, the present inventors have studied diligently again and again to find that a cleaning agent comprising a pellet containing 5 to 50 parts by weight of bishydroxyalkyl terephthalate, based on 100 parts by weight of a thermoplastic resin, has excellent cleaning properties and replacement properties and can further improve the workability during the cleaning of a resin-molding machine by applying heat to the cleaning agent to hold it in a plasticized state in the resin-molding machine. This finding has led the present inventors to complete the present invention
Bishydroxyalkyl terephthalate is hereinafter also described as "a substance that is liquid at use temperature".

The present invention provides the following (1) to (6).
(1) A cleaning agent comprising a pellet containing a thermoplastic resin, and 5 to 50 parts by weight of bishydroxyalkyl terephthalate, based on 100 parts by weight of the thermoplastic resin.
(2) The cleaning agent according to the above (1), wherein the thermoplastic resin is at least one selected from the group consisting of a polystyrene-based resin, a polyolefin-based resin, a polymethacrylate-based polymer, a polycarbonate-based polymer, and a polyester-based polymer.
(3) The cleaning agent according to the above (1) or (2), wherein the cleaning agent contains 0.1 to 50% by mass of at least one selected from the group consisting of water, a blowing agent, an inorganic substance, an antioxidant, a fluorinated polymer, and an acid anhydride-modified polymer.
(4) A process for cleaning a resin-molding machine, comprising a step of putting the cleaning agent according to any one of the above (I) to (3) into the cylinder of a resin-molding machine; a step of holding the cleaning agent in a plasticized state in the cylinder; and a step of discharging the cleaning agent from the cylinder.
(5) The process for cleaning a resin-molding machine according to the above (4), wherein in the holding step, the cleaning agent is held at a temperature of 130°C or more for 5 minutes or more.
(6) The process for cleaning a resin-molding machine according to the above (4) or (5), wherein in the discharge step, the cleaning agent is discharged by putting a composition containing a substance non-melting at use temperature into the cylinder.

### Advantages of the Invention

The cleaning agent and the process for cleaning a resin-molding machine using the same according to the present invention have excellent cleaning properties and replacement properties, compared with conventional ones, so further efficiency of the work of cleaning the resin-molding machine can be intended, and the amount of the replacement material used during replacement work can be reduced.

### Best Mode for Carrying Out the Invention

An embodiment of the present invention will be described below. The following embodiment is illustration for explaining the present invention. The present invention is not limited to only this embodiment and can be carried out in various forms, without departing from the gist thereof.

### <Cleaning Agent Comprising Pellets>

A cleaning agent in this embodiment comprises pellets (molded products) containing a thermoplastic resin, and 5 to 50 parts by weight of a substance that is liquid at use temperature (hereinafter also referred to as a "liquid substance"), based on 100 parts by weight of this thermoplastic resin. By molding into pellets in this manner, uniform filling in a resin-molding machine is possible, and handling is also easy. Also, by containing a predetermined liquid substance during heat application, particularly, cleaning properties and replacement properties are enhanced, and further the workability during the cleaning of a resin-molding machine can be further improved, compared with conventional ones.

The substance that is liquid at use temperature at least needs to be liquid at temperature for cleaning the resin-molding machine. Here, the concept of the liquid includes gel. In other words, the liquid substance is a substance having a melting point lower than the cleaning temperature, and a boiling point higher than the cleaning temperature. When the cleaning temperature is in a range, the liquid substance needs to have a melting point lower than the lower limit value of the cleaning temperature, and a boiling point higher than the upper limit value of the cleaning temperature. More specifically, the substance that is liquid at use temperature is preferably liquid at 130°C or more, and more preferably at 150°C or more.

The substance that is liquid at use temperature exhibits the state of liquid or solid at room temperature, depending on its melting point, and may be in any form. The substance that is liquid at use temperature preferably has a melting point of-60°C or more, more preferably 50°C or more, and further preferably 100°C to 130°C. In the case where the liquid substance is liquid at room temperature, when a large amount of the liquid substance is compounded with a thermoplastic resin, and compatibility with the thermoplastic resin is poor, bleedout or the like occurs, so the pellets become sticky, and it tends to be difficult to introduce the pellets into a resin-molding machine to be cleaned. But, there is an advantage that when the liquid substance is mixed with a thermoplastic resin to mold pellets, a large amount of the liquid substance is easily added in a liquid state by a pump or the like. On the other hand, in the case where the liquid substance is solid at room temperature, there are advantages that in molding into pellets, the liquid substance can be blended with a thermoplastic resin and introduced into an extruder, and that the form stability of the obtained pellets is enhanced. The melting point of the substance that is liquid at use temperature is a value measured according to JIS K 0064: 1992. A melting point of room temperature or less is out of the range of this standard, but the operation follows the standard.

The substance that is liquid at use temperature preferably has a boiling point of 300°C or more, more preferably 350°C or more, and further preferably 400°C or more. When the boiling point of the liquid substance is 300°C or more, the liquid substance does not volatilize easily during cleaning, and the concentration is not easily reduced, so a reduction in cleaning effect can be suppressed. Also, since the liquid substance does not volatilize easily during cleaning, the occurrence of ignition and the like during work can be reduced even if cleaning is performed at 300°C or more, therefore, safety can be enhanced. The boiling point of the substance that is liquid at use temperature is a value measured according to JIS K 5601-2-3: 1999. A boiling point of 300°C or more is out of the range of the standard, but the operation follows the standard.

Specific examples of bishydroxyalkyl terephthalate include, but are not particularly limited to, for example, bishydroxyethyl terephthalate (BHET), bishydroxypropyl terephthalate (BHPT), and bishydroxybutyl terephthalate (BHBT). One of bishydroxyalkyl terephthalate can be used alone, or two or more can be used in combination.

Bishydroxyalkyl terephthalate is preferably bishydroxyalkyl terephthalate having an alkyl group having 2 to 5 carbon atoms, more preferably bishydroxyalkyl terephthalate having at least one selected from the group consisting of an ethyl group, an n-propyl group, an isopropyl group, and an n-butyl group, and further preferably bishydroxyethyl terephthalate.

The above bishydroxyalkyl terephthalate can be manufactured by various publicly known synthesis methods and chemical decomposition methods, and those manufactured by any manufacturing method can be preferably used. But, considering manufacturing cost and the like, the above bishydroxyalkyl terephthalate is preferably a decomposition product obtained by the chemical decomposition of polyalkylene terephthalate. As a specific example of the decomposition product obtained by such a chemical decomposition method, for example, bishydroxyalkyl terephthalate having an alkyl group having 2 to 4 carbon atoms can be obtained by heating polyethylene terephthalate to 200°C or more in the presence of glycol having a corresponding alkyl group (for example, ethylene glycol, in the case of 2 carbon atoms) and a catalyst.

For the thermoplastic resin, various publicly known materials used in general injection molding, extrusion molding, and the like can be appropriately used, but the melt flow rate (MFR; JIS-K7210, 220°C, 10 kg load) is preferably 0.1 to 100 g/10 min. By the melt flow rate being in this range, a fluid having suitable viscosity is formed when heat is applied for plasticization, and together with the cleaning action of the above substance having liquid properties at use temperature, very high cleaning properties and replacement properties are exhibited, and the filling properties in the resin-molding machine and extrudability are dramatically improved. As a result, the workability during cleaning, can be improved. On the other hand, if the melt flow rate is less than 0.1 g/10 min., the filling properties or extrudability at a molding temperature of 200 to 280°C, which is a standard treatment condition, is poor, and if the melt flow rate is more than 100 g/10 min., the cleaning effect is reduced. The above melt flow rate is more preferably 0.3 to 50 g/10 min., and further preferably 0.5 to 30 g/10 min.

Specific examples of the thermoplastic resin include, but are not particularly limited to, for example, a polystyrene-based resin, a polyolefin-based resin, a polymethacrylate-based polymer, a polycarbonate-based polymer, a polyester-based polymer, a polyamide-based resin, and polybutene. One thermoplastic resin can be used alone, or two or more thermoplastic resins can be used in combination. The molecular weight of the thermoplastic resin is not particularly limited, but is usually about 100,000 to 400,000, and more preferably 200,000 to 300,000.

Specific examples of the polystyrene-based resin include, for example, polystyrene, a styrene-acrylonitrile copolymer, and a styrene-methyl methacrylate copolymer. Among these, the polystyrene-based resin is preferably a styrene-acrylonitrile copolymer, and is more preferably, particularly, a styrene-acrylonitrile copolymer having an acrylonitrile content of 5% by mass or more and less than 50% by mass because of excellent cleaning properties and non-residual properties in the resin-molding machine.

Specific examples of the polyolefin-based resin include, for example, a polyethylene-based resin and a polypropylene-based resin. Here, the polyethylene-based resin and the polypropylene-based resin include a copolymerization resin of ethylene or propylene and α-olefin. Among these, the polyolefin-based resin is preferably a resin comprising polypropylene or a propylene copolymer because of excellent cleaning properties and non-residual properties in the resin-molding machine.

From the viewpoints that soil is easily visually recognized in use, that handling properties is excellent, and the like, a transparent resin, such as polycarbonate, polyethylene terephthalate, or polymethyl methacrylate, is preferably used as the thermoplastic resin.

The cleaning agent contains 5 to 50 parts by mass of the substance that is liquid at use temperature, based on 100 parts by mass of the thermoplastic resin, and more preferably 10 parts by mass or more, in terms of further enhancing the cleaning properties and replacement properties with respect to residues. On the other hand, in terms of suitably maintaining the viscosity when heat is applied for plasticization, and enhancing the filling properties in the resin-molding machine or extrudability to improve workability during cleaning, the molded products preferably contain 50 parts by mass or less of the substance that is liquid at use temperature, based on 100 parts by mass of the thermoplastic resin, and more preferably 30 parts by mass or less.

In terms of molding pellets containing the substance that is liquid at use temperature and the thermoplastic resin, the combination of both is also important. In other words, the compatibility between the thermoplastic resin and the substance having liquid properties at use temperature is important. Preferred examples for pelletization include, for example, a combination of a styrene-acrylonitrile copolymer and bishydroxyalkyl terephthalate.

The above molded products may contain various additives, according to the performance required for the cleaning purpose and application. For example, the molded products preferably contain a fluorinated polymer and/or an acid- or acid anhydride-modified polymer as other components, in terms of further enhancing the cleaning properties and replacement properties.

Specific examples of the fluorinated polymer include, but are not particularly limited to, for example, polytetrafluoroethylene, a tetrafluoroethylene-ethylene copolymer, and a tetrafluoroethylene-perfluoroalkyl vinyl ether copolymer. Among these, the fluorinated polymer is more preferably an acrylic resin-modified polytetrafluoroethylene and its copolymer. Specific examples thereof include, for example, the acrylic resin-modified polytetrafluoroethylene "METABLEN A-3000" commercially available from MITSUBISHI RAYON CO., LTD. The content of the fluorinated polymer is not particularly limited, but is preferably 0.1 to 20% by mass, based on the total amount of the molded products, and more preferably 0.5 to 10% by mass.

Specific examples of the acid- or acid anhydride-modified polymer include, but are not particularly limited to, for example, acid- or acid anhydride-modified polyolefin, and a copolymer of acrylic acid, methacrylic acid, or maleic anhydride and styrene. Among these, the acid- or acid anhydride-modified polymer is preferably carboxylic anhydride group-modified polyolefin. Specific examples of the carboxylic anhydride group-modified polyolefin include, for example, the carboxylic anhydride group-modified low molecular weight polypropylene "Umex 1010" commercially available from Sanyo Chemical Industries, Ltd. Also, the acid-or acid anhydride-modified polymer preferably has a high content of acid or acid anhydride. More specifically, the content of acid or acid anhydride in the modified polymer is preferably 1 to 20% by mass, and more preferably 5 to 15% by mass. The content of the acid- or acid anhydride-modified polymer is not particularly limited, but is preferably 0.1 to 20% by mass, based on the total amount of the molded products, and more preferably 0.5 to 10% by mass. When the acid- or acid anhydride-modified polymer and the above fluorinated copolymer are combined, the total amount of both is preferably 0.5 to 20% by mass, based on the total amount of the molded products.

The cleaning agent preferably contains moisture (water) as other components. The moisture included in the molded products becomes water vapor, and so on, when heat is applied to the resin-molding machine, thereby effectively acting on the peeling off of residues during cleaning, further enhancing the cleaning properties and replacement properties. Therefore, preferably, the moisture is included in the molded products so as not to leave externally easily during introduction into the resin-molding machine. For example, preferably, using the moisture absorption properties of the above thermoplastic resin, the moisture is adsorbed on the thermoplastic resin surface; the moisture is kneaded to be included in the thermoplastic resin; and a porous thermoplastic resin is formed, and the moisture is enclosed inside. The content of the moisture is preferably 0.1% by mass or more, based on the total amount of the molded products, in terms of further enhancing the cleaning properties and replacement properties, and preferably 10% by mass or less, in terms of the handling properties of the cleaning agent and the ease of cleaning operation.

The cleaning agent preferably contains a blowing agent as other components. The blowing agent included in the molded products diffuses the plasticized cleaning agent throughout the resin-molding machine, and so on, thereby further enhancing the cleaning properties and replacement properties. Specific examples of this blowing agent include, but are not particularly limited to, for example, an inorganic blowing agent, such as sodium bicarbonate or ammonium carbonate, and an organic blowing agent, such as azodicarbonamide or azobisisobutyronitrile. The content of the blowing agent is preferably 0.1 to 4% by mass, based on the total amount of the molded products, and more preferably 0.5 to 3% by mass. In order to further enhance the cleaning properties and replacement properties, preferably, an alkali metal salt described later and the blowing agent are combined, and preferably, the blowing agent is previously kneaded into the thermoplastic resin.

The cleaning agent preferably contains at least one or more of an alkali metal salt and an inorganic filler as other components, in terms of further enhancing the cleaning properties and replacement properties.

Specific examples of the alkali metal salt include, but are not particularly limited to, for example, metal stearate, such as magnesium stearate. When the alkali metal salt is added, lubricity is improved, so it is more difficult for the cleaning agent to remain in the resin-molding machine, and even if the cleaning agent remains, its removal is easy. The content of the alkali metal salt is preferably 0.1 to 10% by mass, based on the total amount of the molded products. The alkali metal salt is preferably previously kneaded into the thermoplastic resin to further enhance the effect of improving lubricity.

Specific examples of the inorganic filler include, but are not particularly limited to, for example, calcium carbonate, magnesium carbonate, titanium oxide, talc, aluminum hydroxide, magnesium hydroxide, zeolite, mica, diatomaceous earth, glass powder, glass spheres, shirasu balloons, quicksand, and wollastonite.

The cleaning agent preferably contains an antioxidant as other components, in terms of enhancing the thermal stability of the cleaning agent. A phenol or phosphorus compound is preferably used as the antioxidant. Specific examples thereof include, but are not particularly limited to, for example, 2,6-di-tert-butyl-4-methylphenol, n-octadecyl-3-(3,5-di-tert-butyl-4-hydroxyphenyl)propionate, tris(2,4-di-tert-butylphenyl)phosphite, bis(2,6-di-tert-butyl-4-methylphenyl)pentaerythritol phosphite, and 2,2-methylenebis(4,6-di-tert-butylphenyl)octyl phosphite.

A publicly known form can be appropriately employed as a specific form of the pellet, for example, a mixed product, a kneaded product, or a core-shell structure pelletized into a predetermined shape. Among these, a mixed and molded product or a kneaded and molded product obtained by previously mixing or melting and kneading the substance having liquid properties at use temperature, the thermoplastic resin, and other components compounded as required and molding them into a pellet or a particle is more preferred, and a kneaded and molded product is further preferred. By being a mixed and molded product or a kneaded and molded product in this manner, workability during cleaning work, such as handling properties at room temperature and the ease of introduction into the resin-molding machine, is dramatically improved, and the compatibility between the substance having liquid properties at use temperature and the thermoplastic resin when heat is applied for plasticization is improved, so the cleaning properties and replacement properties can be further enhanced.

Usually, pelletization is performed by melting and kneading the thermoplastic resin and the substance that is liquid at use temperature by an extruder. Generally, the use temperature of the cleaning agent and the pelletization temperature range are not largely different, so, of course, the substance that is liquid at use temperature is in a liquid state in pelletization. In this case, the unmelted thermoplastic resin and a large amount of the liquid are present at the early stage of pelletization operation, so the thermoplastic resin may not be sufficiently melted and may be ejected from the vent port, or only the liquid may be ejected from the die exit, and pelletization is often difficult. Also, the temperature of the extruder introduction port increases, and a problem that the substance that is liquid at use temperature softens near the introduction port and blocks the introduction port occurs easily. With respect to these, the present inventors have found conditions under which the thermoplastic resin and the substance that is liquid at use temperature can be pelletized well by the extruder, specifically, a method in which when the thermoplastic resin and BHET are pelletized, a premix obtained by sufficiently mixing the thermoplastic resin and the BHET are previously fabricated before introduction so that the thermoplastic resin and the BHET are uniformly fed at the introduction port, and this premix is introduced into an extruder, and a method in which the thermoplastic resin and BHET are respectively uniformly introduced, using two precision weight feeders.
In these methods, desirably, using a twin screw extruder having a sufficient melting and kneading zone, with an extruder size of L/D (L: extruder length, and D: screw outer diameter) = 30 or more, desirably 40 or more, the amount of the premix introduced is made appropriate so that the premix can be stably pelletized. In addition, desirably, the introduction port is sufficiently cooled so that the BHET is not melted at the introduction port, thus preventing the blocking of the introduction port.

The pellets can be obtained, for example, by melting and kneading (mixing) the substance having liquid properties at use temperature, the thermoplastic resin, and other components to mold into the desired shape, using a kneader, an extruder, a Banbury mixer, or the like. The size of the pellet is not particularly limited, but is generally a minor axis of 2.0 to 5.2 mm, a major axis of 3.0 to 9.5 mm, and a length of 3.0 to 8.5 mm, and preferably a minor axis of 2.0 to 3.0 mm, a major axis of 3.0 to 4.5 mm, and a length of 3.0 to 4.5 mm, in terms of the ease of cutting the strand, the ease of handling the pellets, and the like.

In this specification, the concept of the "solid" includes a crystalline solid and an amorphous solid and a composite thereof, but does not include gel in an intermediate state between solid and liquid. The cleaning agent in this embodiment includes, in addition to an aspect of the cleaning agent comprising only the above-described pellets (molded products), an aspect of the cleaning agent combining the above-described pellets (molded products) and at least one of other solid materials, liquid materials, and gel materials.

### <Cleaning Process>

A cleaning process in this embodiment is one aspect in which the above cleaning agent can be preferably used in a resin-molding machine cleaning application, more specifically, a process in which the above cleaning agent is introduced into the cylinder of a resin-molding machine, heat is applied to the cleaning agent to hold it in a plasticized (melted) state, and then, the plasticized cleaning agent is discharged from the cylinder of the resin-molding machine.

The resin-molding machine that can be applied includes, for example, an injection molding machine and an extrusion molding machine but is not particularly limited to these as long as the resin-molding machine has a cylinder for heating, melting, and kneading (mixing) the resin. The above cleaning agent can be widely applied to publicly known resin-molding machines. Here, for example, when the above cleaning agent is applied to an in-line screw type injection molding machine or extrusion molding machine, the inside of the cylinder, and the injection molding or extrusion screw located in the cylinder, or the cavity and the like can be simultaneously cleaned without performing disassembly and cleaning.

The heat applied to the cleaning agent should be appropriately set according to the type of residues, such as the resin or carbide, remaining in the cylinder, the composition of the thermoplastic resin and the like compounded in the cleaning agent, and the like, and is not particularly limited. More specifically, the temperature of the cylinder of the resin-molding machine is more preferably 130°C or more, further preferably 180°C or more, and particularly preferably 220°C or more. By setting such temperature, suitable viscosity and elasticity can be provided to the plasticized cleaning agent, so very high cleaning properties and replacement properties are exhibited, and the filling properties in the resin-molding machine or extrudability is improved. Therefore, further efficiency of workability during cleaning work can be intended. The upper limit of the heating temperature is not particularly limited, but is usually about 400°C.

The timing of applying heat to the cleaning agent may be after a predetermined time elapses after the cleaning agent is introduced into the cylinder of the resin-molding machine, simultaneous with introduction into the cylinder, or before introduction into the cylinder. When heat is applied to the cleaning agent simultaneously with introduction into the cylinder, it can be carried out, for example, by introducing the cleaning agent into the previously heated cylinder. When heat is applied to the cleaning agent before introduction into the cylinder, it can be carried out, for example, by previously applying heat to the cleaning agent to plasticize the thermoplastic resin, and introducing this plasticized cleaning agent into the cylinder.

Here, preferably, before the plasticized cleaning agent is discharged from the resin-molding machine, the plasticized cleaning agent is held at a cylinder temperature of 130°C or more for 5 minutes or more, with the cylinder of the resin-molding machine filled with the plasticized cleaning agent. During this holding treatment, residues, such as carbide, attached to the cylinder, the screw, and the like are swelled by the substance having liquid properties at use temperature contained in the cleaning agent, are adapted to the thermoplastic resin, and so on, so the residues can be cleaned and discharged very efficiently and quickly from the cylinder of the resin-molding machine.

The above holding treatment step is preferably carried out, following the step of applying heat to the cleaning agent to plasticize the thermoplastic resin, in terms of productivity. The holding temperature and time should be appropriately set according to the type of residues remaining in the cylinder, the composition of the cleaning agent, and the like, and are not particularly limited. The cleaning agent is preferably held at 130°C or more for 30 minutes or more, more preferably at 180°C or more for 30 minutes or more, and further preferably at 220°C or more for 30 minutes or more. The upper limit of the holding temperature and time is preferably 400°C or less, and 10 hours or less, in terms of a reduction in workability and productivity, and the like.

In the step of discharging the cleaning agent held in a plasticized state in the resin-molding machine, the use of a composition containing a substance non-melting at use temperature has a large effect on the removal of residues, such as carbide, attached to the cylinder, the screw, and the like.

A composition containing metal, an inorganic substance, a thermosetting resin, and the like non-melting at a use temperature of 130 to 400°C can be used as the composition containing a substance non-melting at use temperature. In terms of workability and productivity, a thermoplastic resin composition containing particulate and/or fibrous metal, glass, and inorganic substance is preferred. Specific examples of the thermoplastic resin composition include, for example, a thermoplastic resin composition containing 5 parts by weight or more, preferably 10 parts by weight or more, more preferably 20 parts by weight or more, and most preferably 40 parts by weight or more of wollastonite, glass fiber, metal fiber, and the like, based on 100 parts by weight of a thermoplastic resin.

The use of a composition containing a substance having non-melting properties at use temperature in the step of discharging the plasticized cleaning agent from the cylinder of the resin-molding machine, together with the step of introducing the cleaning agent into the cylinder of the resin-molding machine, and the step of applying heat to the cleaning agent to hold it in a plasticized state, achieves a large synergistic effect on cleaning performance and is particularly effective for the removal of residues, such as carbide, attached to the cylinder, screw, and the like of the resin-molding machine.

### Examples

The present invention will be described below in detail by way of Examples and Comparative Examples, but the present invention is not particularly limited to these. In the following, "parts" and "%" mean "parts by mass" and "% by mass" respectively.

The resin-molding machine and measurement conditions used in Examples and Comparative Examples are shown below.

### (A) Resin-Molding Machine

An in-line screw type injection molding machine (clamping force: 125 tons, capacity: 10 ounces) was used.

### (B) Melt Flow Rate (MFR)

Melt flow rate was measured at 220°C, with a 10 kg load, according to JIS-K7210.

### Fabrication of Cleaning Agents

### [Examples 1 to 16]

A styrene-acrylonitrile-based resin I (abbreviation: ASI, trade name: Stylac AST8505, manufactured by Asahi Kasei Chemicals Corporation, MFR: 5 g/10 min.), a styrene-acrylonitrile-based resin II (abbreviation: ASII, trade name: Stylac AST9701, manufactured by Asahi Kasei Chemicals Corporation, MFR: 50 g/10 min.), a polyester-based resin (abbreviation: PET, trade name: Lemapet, manufactured by Mitsubishi Engineering-Plastics Corporation, MFR: 12 g/10 min.), a polypropylene-based resin (abbreviation: PP, trade name: SunAllomer, manufactured by SunAllomer Ltd., MFR: 10 g/10 min.), bishydroxyethyl terephthalate (abbreviation: BHET, trade name: BHET (J), manufactured by NIPPON FINE CHEMICAL CO., LTD., melting point: 110°C, boiling point: 410°C), bishydroxybutyl terephthalate (abbreviation: BHBT, obtained by pyrolyzing TUFPET PBT manufactured by MITSUBISHI RAYON CO., LTD.), bis(2-ethylhexyl)phthalate (abbreviation: DOP, trade name: DOP, manufactured by J-PLUS Co., Ltd., melting point: -50°C, boiling point: 386°C), propylene glycol fatty acid ester (compound name: propylene glycol monobehenate, abbreviation: fatty acid ester, trade name: RIKEMAL PB-100, manufactured by Riken Vitamin Co., Ltd., melting point: 57°C), acrylic resin-modified polytetrafluoroethylene (abbreviation: fluoride, trade name: METABLEN A-3000, manufactured by MITSUBISHI RAYON CO., LTD.), acid anhydride group-modified low molecular weight polypropylene (abbreviation: acid anhydride, trade name: Umex 1010, manufactured by Sanyo Chemical Industries, Ltd.), baking soda (abbreviation: baking soda, trade name: sodium bicarbonate, manufactured by ASAHI GLASS CO., LTD.), and water were mixed in a ratio shown in Table 1, melt-kneaded using an extruder, and then cut by a pelletizer to obtain each of cleaning agents in Examples 1 to 16 that are particulate kneaded and molded products.

### Performance Evaluation of Cleaning Agents

### [Examples 1 to 8]

The cylinder of the injection molding machine was filled with the black colored ABS resin "trade name: Stylac ABS121) manufactured by Asahi Kasei Chemicals Corporation, and then, the black colored ABS resin was allowed to stay at 300°C for 20 hours.

Next, as precleaning, 2 kg of "trade name: ASACLEAN U type" manufactured by Asahi Kasei Chemicals Corporation was introduced into the cylinder of the injection molding machine to perform resin replacement, and then, ASACLEAN U type was discharged to empty the cylinder.

After the above operation, 2 kg of each of the cleaning agents in Examples 1 to 8 shown in Table 1 was introduced into the cylinder and held at 270°C for 1 hour. Next, each of the plasticized cleaning agents in Examples 1 to 8 was discharged from the cylinder by introducing 2 kg of "trade name: ASACLEAN new-EX type" manufactured by Asahi Kasei Chemicals Corporation into the cylinder to perform resin replacement, and further, ASACLEAN new-EX type was discharged to empty the cylinder, thus completing the cleaning work.

After the completion of the cleaning work, the screw of the injection molding machine was pulled out, and the surface of the screw was visually observed. The evaluation result is shown in Table 1 together.

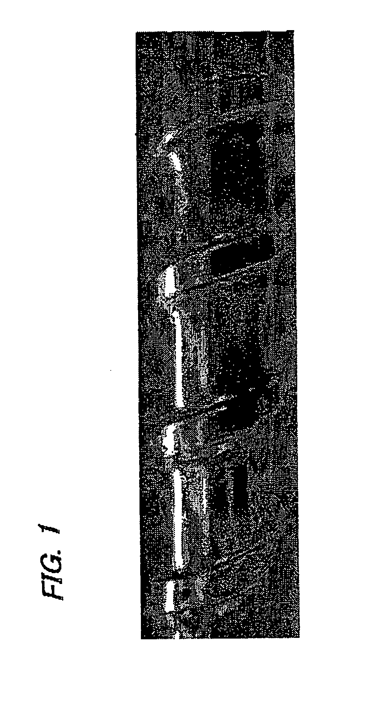

A plane photograph of the screw cleaned using the cleaning agent in Example 2 is shown in Figure 1. As is clear from Figure 1, in the screw cleaned using the cleaning agent in Example 2, the attachment of residues, such as the burned carbide of the resin, and the fixation of the cleaning agent in Example 2 were not observed, and the metallic luster of the screw body was visually recognized.

### [Examples 9 to 16]

Operations similar to those of Example 1 were performed for cleaning work, except that 2 kg of each of the cleaning agents in Examples 9 to 16 shown in Table 1 was introduced into the cylinder without performing the above precleaning. After the completion of the cleaning work, the screw of the injection molding machine was pulled out, and the surface of the screw was visually observed. The evaluation result is shown in Table 1 together.

### [Example 17]

The cylinder of the injection molding machine was filled with the black colored ABS resin "trade name; Stylac ABS121) manufactured by Asahi Kasei Chemicals Corporation, and then, the black colored ABS resin was allowed to stay at 300°C for 20 hours.

Next, as precleaning, 2 kg of "trade name: ASACLEAN U type" manufactured by Asahi Kasei Chemicals Corporation was introduced into the cylinder of the injection molding machine to perform resin replacement, and then, ASACLEAN U type was discharged to empty the cylinder.

After the above operation, 2 kg of the cleaning agent in Example 17 shown in Table 1 was introduced into the cylinder and held at 270°C for 10 minutes. Next, the plasticized cleaning agent in Example 17 was discharged from the cylinder by introducing 2 kg of "trade name: ASACLEAN new-EX type" manufactured by Asahi Kasei Chemicals Corporation into the cylinder to perform resin replacement, and further ASACLEAN new-EX type was discharged to empty the cylinder, thus completing the cleaning work.

After the completion of the cleaning work, the screw of the injection molding machine was pulled out, and the surface of the screw was visually observed. The evaluation result is shown in Table 1 together.

### Fabrication and Performance Evaluation of Cleaning Agents

### [Comparative Example 1]

The same operations as in Example 1 were performed for cleaning work, except that 2 kg of "trade name: ASACLEAN U type" manufactured by Asahi Kasei Chemicals Corporation was used instead of the cleaning agent in Example 1 and introduced into the resin-molding machine. After the completion of the cleaning work, the screw of the injection molding machine was pulled out, and the surface of the screw was visually observed. The evaluation result is shown in Table 1 together.

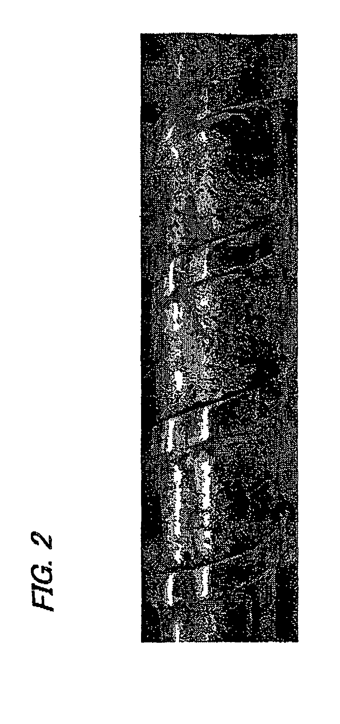

A plane photograph of the screw cleaned using the cleaning agent in Comparative Example 1 is shown in Figure 2. As is clear from Figure 2, in the screw cleaned using the cleaning agent in Comparative Example 1, the attachment of residues, such as the burned carbide of the resin, was observed, and the metallic luster of the screw body was not visually recognized.

### [Comparative Example 2]

A gel resin (abbreviation: gel PMMA) obtained by subjecting the polymethyl methacrylate resin "trade name: Delpet" manufactured by Asahi Kasei Chemicals Corporation to heating treatment and then grinding it, and bishydroxyethyl terephthalate (abbreviation: BHET, trade name: BHET (J) manufactured by NIPPON FINE CHEMICAL CO., LTD.) were used instead of the cleaning agent in Example 1, and 2 kg of these were introduced into the injection molding machine in a ratio shown in Table 1.

But, in this Comparative Example 2, when the screw was operated, overload occurred, and the operation of the screw stopped, so the cleaning agent in Comparative Example 2 was not extruded to fill the injection molding machine. As a result, the cleaning of the injection molding machine was not performed.

### [Comparative Example 3]

A gel resin (abbreviation: gel PMMA) obtained by subjecting the polymethyl methacrylate resin "trade name: Delpet" manufactured by Asahi Kasei Chemicals Corporation to heating treatment and then grinding it, and bishydroxyethyl terephthalate (abbreviation: BHET, trade name: BHET (J), manufactured by NIPPON FINE CHEMICAL CO., LTD.) were used instead of the cleaning agent in Example 1, and 2 kg of these were introduced into the injection molding machine in a ratio shown in Table 1.

But, in this Comparative Example 3, when the operation of introducing the cleaning agent into the cylinder and holding it at 270°C was performed, the BHET was ejected from the nozzle of the injection molding machine, so the cylinder was not sufficiently filled with the cleaning agent, and it was difficult to sufficiently perform the cleaning of the injection molding machine.

Then, the screw of the injection molding machine was pulled out, and the surface of the screw was visually observed. The evaluation result is shown in Table 1 together.

**[Table 1]**

| | Cleaning agent composition (unit: parts by mass) | | | | | | | | | | | | Evaluation | | | |
|---|---|---|---|---|---|---|---|---|---|---|---|---|---|---|---|---|
| | Liquid substance | | | | Thermoplastic ratio | | | | Fluoride | Acid anhydride | water | Baking soda | Precleaning | Attachment of residues | Replacement properties during replacement work | Resin-molding machine cleaning workability |
| | Bishydroxyalkyl terephthalate | | DOP | Fatty acid ester | | | | | | | | | | | | |
| | BHET | BHBT | | | ASI | ASII | PET | PP | | | | | | | | |
| Example 1 | 5 | - | - | - | 100 | - | - | - | - | | - | - | Performed | Very little | Good | Good |
| Example 2 | 20 | - | - | - | 100 | - | - | - | - | | - | - | Performed | No | Good | Good |
| Example 3 | 30 | - | - | - | 100 | | - | - | - | | - | - | Performed | No | Good | Good |
| Example 4 | 40 | - | - | - | 100 | - | - | - | - | | - | - | Performed | No | Good | Good though part of BHET was ejected |
| Example 5 | - | 20 | - | - | 100 | - | - | - | - | | - | - | Performed | No | Good | Good |
| Example 6 | 20 | - | - | - | - | 100 | - | | - | | - | - | Performed | Very little | Good | Good |
| Example 7 | 20 | - | - | - | - | - | 100 | - | - | | - | - | Performed | No | Good | Good |
| Example 8 | 20 | - | - | - | - | - | - | 100 | | | - | - | Performed | Very little | Good | Good |
| Example 9 | 20 | - | - | - | 100 | - | 100 | - | 1 | 1 | 1 | 1 | Not performed | No | Good | Good |
| Example 10 | 20 | - | - | - | 100 | - | - | - | 1 | - | - | - | Not performed | No | Good | Good |
| Example 11 | 20 | - | - | - | 100 | - | - | - | - | 1 | - | - | Not performed | No | Good | Good |
| Example 12 | 20 | - | - | - | 100 | - | - | - | - | - | 1 | - | Not performed | No | Good | Good |
| Example 13 | 20 | - | - | - | 100 | - | - | - | - | - | - | 1 | Not performed | No | Good | Good |
| Example 14 | 20 | - | - | - | 100 | - | - | - | - | - | - | - | Not performed | Little | Good | Good |
| Example 15* | 0 | - | 20 | - | 100 | - | - | - | - | - | - | - | performed | Very little | Good | Good |
| Example 16* | 0 | - | - | 20 | 100 | - | - | - | - | - | - | - | Performed | Very little | Good | Good |
| Example 17 | 20 | - | 0 | 0 | 100 | - | - | - | - | - | - | - | Performed | Very little | Good | Good |
| Comparative Example 1 | - | - | - | - | - | - | - | - | - | - | - | - | Performed | Much | Good | Good |
| Comparative Example 2 | 2 | - | - | - | Gel PMMA 100 parts | | | | | | - | - | performed | - | - | . Impossible to clean due to overload |
| Comparative Example 3 | 50 | - | - | - | Gel PMMA 50 parts | | | | | | - | - | Performed | Much | Bad with fixation | Different to clean due to vigorous BHET ejection |

| | | | | | | | | | | | | | | | | |
|---|---|---|---|---|---|---|---|---|---|---|---|---|---|---|---|---|
| * not according to the invention | | | | | | | | | | | | | | | | |

As shown in Table 1, it was confirmed that the cleaning agents in Examples 1 to 17 and the processes for cleaning the resin-molding machine using the same according to the present invention had significantly excellent cleaning properties and replacement properties, compared with Comparative Examples 1 to 3. Also, it was conformed that the cleaning agents and the cleaning processes in Examples 1 to 14 and 17 according to the present invention were suitable for the cleaning of the resin-molding machine, compared with Comparative Examples 2 and 3.

Therefore, it has been.shown that the cleaning agents in Examples 1 to 14 and 17 and the processes for cleaning the resin-molding machine using the same particularly have excellent cleaning properties and replacement properties with respect to residues, such as the thermoplastic resin, attached inside the cylinder and to the screw and the like in the resin-molding machine, so they are very useful in a resin-molding machine cleaning application, for example, because when a transparent resin is molded later, appearance defects due to black specks and/or mixed foreign matter, and the like are substantially reduced, and the yield is improved.

Also, it has been shown that according to the cleaning agents in Examples 1 to 14 and 17 and the processes for cleaning the resin-molding machine using the same, when heat is applied for plasticization, the cleaning agent becomes a liquid having suitable viscosity, so the cleaning agent can fill or can be extruded without imposing an excessive mechanical burden on the cylinder, screw, and the like of the resin-molding machine, and therefore, the workability during its cleaning can be further improved, and the mechanical reliability of the resin-molding machine is not compromised, so longer apparatus life is intended.

### Industrial Applicability

As described above, the cleaning agent and the process for cleaning a resin-molding machine using the same according to the present invention have excellent cleaning properties and replacement properties, compared with conventional ones, so they can be used widely and effectively in applications for cleaning an article to which a resin, various additives, such as a dye and a pigment, and further carbides thereof and the like are attached. Also, the cleaning agent and the process for cleansing a resin-molding machine using the same according to the present invention can make the workability during cleaning more efficient, so they can be used widely and effectively in resin-molding machine cleaning applications.

### Brief Description of the Drawings

Figure 1 is a plane photograph of the screw of an injection molding machine cleaned using the cleaning agent in Example 2; and
Figure 2 is a plane photograph of the screw of the injection molding machine cleaned using the cleaning agent in Comparative Example 1.

## Claims

1. A cleaning agent comprising a pellet containing a thermoplastic resin, and 5 to 50 parts by weight of bishydroxyalkyl terephthalate, based on 100 parts by weight of the thermoplastic resin.

2. The cleaning agent according to claim 1,
wherein the thermoplastic resin is at least one selected from the group consisting of a polystyrene-based resin, a polyolefin-based resin, a polymethacrylate-based polymer, a polycarbonate-based polymer, and a polyester-based polymer.

3. The cleaning agent according to claim 1 or 2,
wherein the pellet contains 0.1 to 50% by mass of at least one selected from the group consisting of water, a blowing agent, an inorganic substance, an antioxidant, a fluorinated polymer, and an acid anhydride-modified polymer.

4. A process for cleaning a resin-molding machine, comprising:
a step of putting the cleaning agent according to any one of claims 1 to 3 into a cylinder of a resin-molding machine;
a step of holding the cleaning agent in a plasticized state in the cylinder; and
a step of discharging the cleaning agent from the cylinder.

5. The process for cleaning a resin-molding machine according to claim 4,
wherein in the holding step, the cleaning agent is held at a temperature of 130°C or more for 5 minutes or more.

6. The process for cleaning a resin-molding machine according to claim 4 or 5,
wherein in the discharge step, the cleaning agent is discharged by putting a composition containing a substance non-melting at use temperature into the cylinder.

## Patentansprüche

1. Reinigungsmittel, umfassend einen Formling, der ein thermoplastisches Harz und 5 bis 50 Gewichtsteile Bishydroxyalkylterephthalat enthält, bezogen auf 100 Gewichtsteile des thermoplastischen Harzes.

2. Reinigungsmittel gemäß Anspruch 1, wobei das thermoplastische Harz wenigstens eines ist, das aus der Gruppe ausgewählt ist, die aus einem Harz auf Polystyrolbasis, einem Harz auf Polyolefinbasis, einem Polymer auf Polymethacrylatbasis, einem Polymer auf Polycarbonatbasis und einem Polymer auf Polyesterbasis besteht.

3. Reinigungsmittel gemäß Anspruch 1 oder 2, wobei der Formling 0,1 bis 50 Massen-% wenigstens eines Bestandteils enthält, der aus der Gruppe ausgewählt ist, die aus Wasser, einem Treibmittel, einer anorganischen Substanz, einem Antioxidans, einem fluorierten Polymer und einem säureanhydridmodifizierten Polymer besteht.

4. Verfahren zum Reinigen einer Harzformmaschine, umfassend:
einen Schritt des Einbringens des Reinigungsmittels gemäß einem der Ansprüche 1 bis 3 in einen Zylinder einer Harzformmaschine;
einen Schritt des Haltens des Reinigungsmittels in einem plastifizierten Zustand in dem Zylinder; und
einen Schritt des Austragens des Reinigungsmittels aus dem Zylinder.

5. Verfahren zum Reinigen einer Harzformmaschine gemäß Anspruch 4, wobei das Reinigungsmittel in dem Schritt des Haltens 5 Minuten oder länger auf einer Temperatur von 130 °C oder mehr gehalten wird.

6. Verfahren zum Reinigen einer Harzformmaschine gemäß Anspruch 4 oder 5, wobei das Reinigungsmittel in dem Schritt des Austragens dadurch ausgetragen wird, dass man eine Zusammensetzung, die eine Substanz enthält, die bei der Gebrauchstemperatur nicht schmilzt, in den Zylinder gibt.

## Revendications

1. Agent nettoyant comprenant une boulette contenant une résine thermoplastique, et de 5 à 50 parties en masse de téréphtalate de bishydroxyalkyle, rapporté à 100 parties en masse de la résine thermoplastique.

2. Agent nettoyant selon la revendication 1,
dans lequel la résine thermoplastique est au moins une choisie dans le groupe constitué d'une résine à base de polystyrène, d'une résine à base de polyoléfine, d'un polymère à base de polyméthacrylate, d'un polymère à base de polycarbonate, et d'un polymère à base de polyester.

3. Agent nettoyant selon la revendication 1 ou 2,
dans lequel la boulette contient de 0,1 à 50 % en masse d'au moins un choisi dans le groupe constitué de l'eau, d'un agent gonflant, d'une substance inorganique, d'un antioxydant, d'un polymère fluoré, et d'un polymère (anhydride d'acide)-modifié.

4. Procédé pour le nettoyage d'une machine de moulage de résine, comprenant :
une étape de dépose de l'agent nettoyant selon l'une quelconque des revendications 1 à 3 dans un cylindre d'une machine de moulage de résine ;
une étape de maintien de l'agent nettoyant dans un état plastifié dans le cylindre ; et
une étape de décharge de l'agent nettoyant à partir du cylindre.

5. Procédé pour le nettoyage d'une machine de moulage de résine selon la revendication 4, dans lequel, dans l'étape de maintien, l'agent nettoyant est maintenu à une température de 130°C ou supérieure pendant 5 minutes ou plus.

6. Procédé pour le nettoyage d'une machine de moulage de résine selon la revendication 4 ou 5, dans lequel, dans l'étape de décharge, l'agent nettoyant est déchargé en déposant une composition contenant une substance ne fondant pas à la température d'utilisation dans le cylindre.
